# EUROPÄISCHE PATENTSCHRIFT

(11) **EP 3 000 306 B1**
(45) Veröffentlichungstag und Bekanntmachung des Hinweises auf die Patenterteilung: **04.12.2019**
(21) Anmeldenummer: 15175565.9
(22) Anmeldetag: 07.07.2015
(51) Int. Cl.: A01D 41/14, A01D 43/08, A01D 69/00

(54) **SELBSTFAHRENDE ERNTEMASCHINE**
SELF-PROPELLED HARVESTER
MOISSONNEUSE AUTOMOTRICE

(30) Priorität: 26.09.2014 DE 102014114040
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Besand, Christian, 33604 Bielefeld (DE); Pollklas, Manfred, 33378 Rheda-Wiedenbrück (DE); Schiewer, Stefan, 48231 Warendorf (DE); Winkler, Martin, 89077 Ulm (DE)
(74) Vertreter: CLAAS Gruppe

(56) Entgegenhaltungen:
- EP-A1- 1 570 724
- EP-A1- 1 609 351
- EP-A2- 2 281 434
- WO-A1-02/056672
- US-A1- 2003 109 292

## Beschreibung

Die vorliegende Erfindung betrifft eine selbstfahrende Erntemaschine gemäß dem Oberbegriff des Anspruches 1.

Die EP 1 609 351 offenbart einen Erntevorsatzantrieb, der einen Aufnahmeförderer umfasst, um Erntegut mit einer veränderbaren Geschwindigkeit aufzunehmen. Zum Antrieb des Aufnahmeförderers ist ein Planetengetriebe vorgesehen. Ein Element des Planetengetriebes wird zur Drehzahländerung über einen fremdkraftbetriebenen Motor, beispielsweise ein Hydraulikmotor, angetrieben, während ein Element mechanisch angetrieben wird. Beim Reversieren dient der Hydraulikmotor als Antrieb.

Aus der WO 2002/056672 A1 ist eine selbstfahrende landwirtschaftliche Erntemaschine in Gestalt eines selbstfahrenden Feldhäckslers bekannt, welche einen ersten hydrostatischen Antrieb zum Antreiben einer Einzugsvorrichtung aufweist. An die Einzugsvorrichtung ist ein Vorsatzgerät ankoppelbar, welches von einem zweiten hydrostatischen Antrieb angetrieben ist. Hierzu ist eine Hydropumpe vorgesehen, die mit einer Antriebswelle eines Verbrennungsmotors trieblich verbunden ist. Die Hydropumpe treibt den jeweiligen Hydromotor des ersten und des zweiten hydrostatischen Antriebes an. Dieses Antriebssystem ermöglicht den Betrieb des Vorsatzgerätes und des Einzuges mit variablen Drehzahlen.

Tendenziell geht die Entwicklung von Vorsatzgeräten hin zu immer größerer werdenden Arbeitsbreiten, was mit einem erhöhten Bedarf an Antriebsleistung einhergeht. Im Fall des hydrostatischen Antriebs ist bei einer Auslegung beispielsweise einer Hydropumpe zum Antreiben verschiedener Vorsatzgerätetypen auf die höchste erforderliche Antriebsleitung abzustellen, um den hydrostatischen Antrieb adäquat zu dimensionieren.

Größere Hydraulikeinheiten gehen mit erhöhten Verlustleistungen und erhöhten Kosten einher.

Der vorliegenden Erfindung liegt daher die Aufgabe zu Grunde, eine selbstfahrende Erntemaschine bereitzustellen, die sich durch ein effizientes und flexibles Antriebskonzept auszeichnet.

Diese Aufgabe wird erfindungsgemäß durch die kennzeichnenden Merkmale des Anspruches 1 gelöst.

Vorteilhafte Weiterbildungen der Erfindung sind Gegenstand der Unteransprüche.

Gemäß Anspruch 1 wird vorgeschlagen, dass ein zweites, mit der Antriebswelle verbindbares Antriebsmittel zum Antreiben des Vorsatzgerätes mit konstanter Drehzahl zuschaltbar ist. Dieses Antriebskonzept gestattet einerseits den drehzahlvariablen Antrieb von Vorsatzgeräten, wie beispielsweise einer Pick-Up oder eines Maisgebisses, und ermöglicht andererseits das Antreiben eines beispielsweise als Mähwerk ausgeführten Vorsatzgerätes, welches eine konstante Antriebsdrehzahl bei gegenüber den anderen Typen von Vorsatzgeräten erhöhten Leistungsaufnahme erfordert. Erreicht wird die Bereitstellung zur Deckung der erhöhten Leistungsaufnahme durch die Summation der Antriebsleistungen des ersten Antriebsmittels und des zweiten Antriebsmittels, wenn letzteres bei Bedarf zugeschaltet wird.

Das erste Antriebsmittel ist als hydrostatischer Antrieb und das zweite Antriebsmittel als mechanischer Antrieb ausgeführt. Hierdurch wird die Variabilität des hydrostatischen Antriebes mit der relativen Einfachheit eines mechanischen Antriebes verbunden. Entsprechend des Typs des angebrachten Vorsatzgerätes wird das als hydrostatischer Antrieb ausgeführte Antriebsmittel alleine zum Antreiben des Vorsatzgerätes genutzt, wobei dieses eine variable Antriebsdrehzahl bereitstellen kann. Ist eine erhöhte Antriebsleistung bei konstanter Antriebsdrehzahl notwendig, so wird das als mechanischer Antrieb ausgeführte zweite Antriebsmittel zugeschaltet. Da beide Antriebsmittel ihre Antriebsleistung an die gemeinsame Antriebswelle zum Antreiben des Vorsatzgerätes abgegeben, ist eine Synchronität der Antriebsdrehzahlen Bedingung.

Die Erntemaschine zeichnet sich dadurch aus, dass eine Summation der Antriebsleistungen durch Zuschaltung des mechanischen Antriebs in Abhängigkeit vom Typ des Vorsatzgerätes erfolgt, und dass die Zuschaltung des mechanischen Antriebs zur Abdeckung des Drehzahl- und Antriebsleistungsspektrums der unterschiedlichen Vorsatzgerätetypen erfolgt.

Hierzu ist die Steuerungseinrichtung dazu eingerichtet, in Abhängigkeit vom Typ des an die Einzugseinrichtung angebrachten Vorsatzgerätes das erste Antriebsmittel und das zweite Antriebsmittel anzusteuern. Die Steuerungseinrichtung steuert entsprechend den Anforderungen des an der Einzugseinrichtung angebrachten Vorsatzgerätes das erste Antriebsmittel und das zweite Antriebsmittel an. Das Antriebskonzept erlaubt eine flexible Anpassung hinsichtlich des Leistungsbedarfs und der Drehzahlvariabilität eines jeweiligen Vorsatzgerätes, welches an die Erntemaschine angeschlossen wird.

Vorzugsweise kann die Steuerungseinrichtung dazu eingerichtet sein, den Typ des angeschlossenen Vorsatzgerätes automatisch zu erkennen. Hierdurch wird sichergestellt, dass der Antrieb des jeweiligen an der Einzugseinrichtung angebrachten Vorsatzgerätes entsprechend der Spezifikation erfolgt. Eine Bedienperson der selbstfahrenden Erntemaschine kann unter anderem davon entlastet, bei Bedarf das zweite Antriebsmittel manuell aktivieren zu müssen.

Vorteilhafterweise kann das zweite Antriebsmittel als Riementrieb ausgeführt sein, dessen Riemen durch ein Spannsystem kuppelbar ist. Hierzu kann das Spannsystem zum Schalten des Riementriebes hydraulisch betätigbar sein.

Insbesondere kann die Steuervorrichtung dazu eingerichtet sein, eine Arbeitsdrehzahl des ersten Antriebsmittels zu überwachen und mit Erreichen eines Schwellwertes für die Arbeitsdrehzahl in Abhängigkeit vom Typ des Vorsatzgerätes das zweite Antriebsmittel zuzuschalten. Hierdurch kann sichergestellt werden, dass bei einem als hydrostatischer Antrieb ausgeführten ersten Antriebsmittel die Zuschaltung des zweiten als Riementrieb ausgeführten Antriebsmittels bei einer Drehzahl des ersten Antriebsmittels erfolgt, welche der Antriebsdrehzahl des zuzuschaltenden zweiten Antriebsmittels entspricht. Im Fall eines Vorsatzgerätes, welches einer konstanten Antriebsdrehzahl bedarf, wird das Vorsatzgerät mittels des ersten Antriebsmittels zunächst auf seine Antriebsdrehzahl beschleunigt. Ist die konstante Antriebsdrehzahl erreicht, wird das zweite Antriebsmittel zugeschaltet.

Weiterhin kann die Steuerungseinrichtung dazu eingerichtet sein, einen doppelt wirkenden Hydraulikzylinder des Spannsystems des Riementriebes anzusteuern, um den Riementrieb zu kuppeln. Somit kommt dem Spannsystem neben der Aufrechterhaltung der Riemenspannung zusätzlich die Aufgabe zu, als eine Kupplung zu fungieren.

Des Weiteren kann die Steuerungseinrichtung dazu eingerichtet sein, den hydrostatischen Antrieb auf einen vorgebbaren, konstanten Druck einzustellen. Die Einstellung auf einen konstanten Druck dient dazu, dass das zweite, als Riementrieb ausgeführte Antriebsmittel das erste, als hydrostatischer Antrieb ausgeführte Antriebsmittel nicht antreibt und dadurch Blindleistung generiert.

Vorteilhafterweise können ein erster, das erste Antriebsmittel umfassender Hydraulickreislauf und ein zweiter, das zweite Antriebsmittel umfassender Hydraulikkreislauf durch die Druckregeleinrichtung regelungstechnisch miteinander gekoppelt sein.

Vorzugsweise kann die Druckregeleinrichtung ein erstes Ventil, welches der Druckregelung des hydrostatischen Antriebes im ersten Hydraulikkreislauf dient, und ein zweites Ventil umfassen, welches auf eine feste Druckdifferenz auf der Hochdruckseite des hydrostatischen Antriebes regelt.

Insbesondere kann der zweite Hydraulikkreislauf ein Schaltventil umfassen, das von der Steuerungseinrichtung in Abhängigkeit von der Vorsatzgeräteerkennung schaltbar ist. Mittels des Schaltventiles ist das zweite Antriebsmittel durch die Steuerungseinrichtung zuschaltbar, wenn eine erhöhte Leistung bei konstanter Drehzahl bereitgestellt werden muss.

Alternativ kann zur Druckregelung des ersten Hydraulikkreislaufes ein Drucksensor vorgesehen sein, der den Hydraulikdruck im ersten Hydraulikkreislauf detektiert und ein den Druck repräsentierendes Signal an eine elektronische Regeleinrichtung sendet, die ein Freigabeventil zur Regelung einer den Hochdruck im ersten Hydraulikkreislauf bereitstellenden Hydraulikpumpe ansteuert. Bei dieser Ausführungsform sind der erste Hydraulikkreislauf und der zweite Hydraulikkreislauf regelungstechnisch nicht voneinander abhängig. Der Drucksensor detektiert den von der Hydraulikpumpe bereitgestellten Hochdruck im ersten Hydraulikkreislauf. Ein den Druck repräsentierendes Signal wird über eine Signalleitung an die elektronische Regeleinrichtung übertragen. Die elektronische Regeleinrichtung bestimmt anhand des Signals durch einen Soll-Ist-Wert-Vergleich den Druck in dem ersten Hydraulikkreislauf. Bei einer Abweichung von einem vorgebbaren Soll-Druck wird durch eine Steuerleitung das Freigabeventil angesteuert, welches der Regelung des Schwenkwinkels der Hydraulikpumpe dient. Bei dieser Alternative wird auf den absoluten Druck im ersten Hydraulikkreislauf geregelt. Die Steuerungseinrichtung kann den ersten Hydraulikkreislauf und den zweiten Hydraulikreislauf steuerungstechnisch miteinander verbinden.

Gemäß einer weiteren Alternative kann zur Druckregelung des ersten Hydraulikkreislaufes eine Steuereinheit ein elektrisch betätigbares Freigabeventil zur Regelung einer den Hochdruck im ersten Hydraulikkreislauf bereitstellenden Hydraulikpumpe mit einem vorgebaren Strom ansteuern. Bei dieser Ausführungsform sind der erste Hydraulikkreislauf und der zweite Hydraulikkreislauf regelungstechnisch ebenfalls unabhängig voneinander. Mittels der Steuereinheit wird das elektrisch betätigbare Freigabeventil durch eine Steuerleitung mit einem vorgebbaren, konstanten Strom beaufschlagt. Die Steuerungseinrichtung kann den ersten Hydraulikkreislauf und den zweiten Hydraulikreislauf steuerungstechnisch miteinander verbinden.

Die vorliegende Erfindung wird nachstehend anhand von in den Zeichnungen dargestellten Ausführungsbeispielen näher erläutert.

Es zeigen:
- Fig. 1: eine schematische Ansicht einer selbstfahrenden Erntemaschine;
- Fig. 2: eine schematisierte Darstellung eines Antriebsstrang der Erntemaschine mit einem ersten Antriebsmittel und einem zweiten Antriebsmittel;
- Fig. 3: eine schematische Ansicht eines ersten Hydraulikkreislaufes zum Betreiben des ersten Antriebsmittels und eines zweiten Hydraulikkreislaufes zum Betreiben des ersten Antriebsmittels gemäß Fig. 2;
- Fig. 4: eine schematische Ansicht des ersten Hydraulikkreislaufes und des zweiten Hydraulikkreislaufes nach Fig. 3 gemäß einer zweiten Ausführungsform;
- Fig. 5: eine schematische Ansicht des ersten Hydraulikkreislaufes und des zweiten Hydraulikkreislaufes nach Fig. 3 gemäß einer dritten Ausführungsform;
- Fig. 6: ein Flussdiagramm zur Veranschaulichung der Inbetriebnahme eines an die Erntemaschine anschließbaren Vorsatzgerätes.

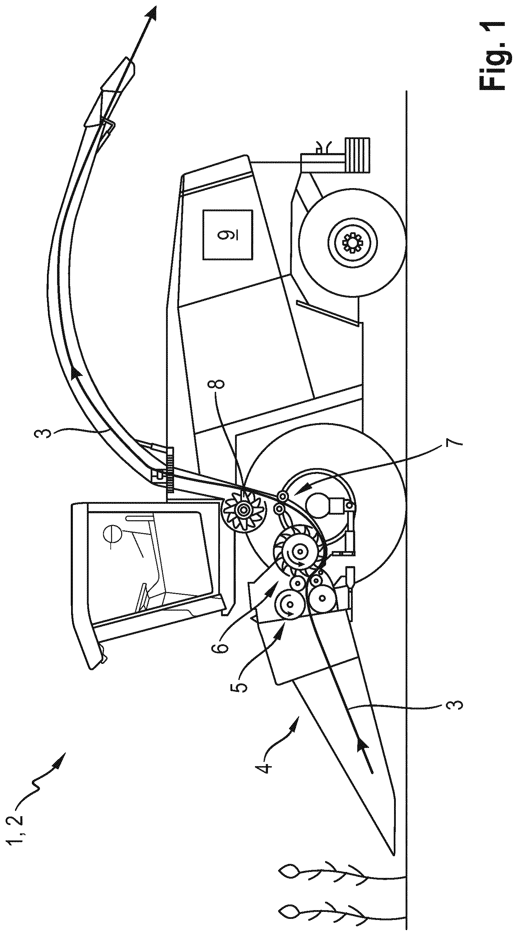

In Fig. 1 ist eine als Feldhäcksler 2 ausgeführte selbstfahrende Erntemaschine 1 dargestellt. Der Feldhäcksler 2 erntet beziehungsweise nimmt mittels eines Vorsatzgerätes 4 Pflanzen vom Feld auf, um das erhaltene Erntegut 3 in Form eines Erntegutstroms (in Fig. 1 als mit Pfeilen versehene Linie angedeutet) durch Arbeitsorgane, die als Bearbeitungs- und Förderorgane des Feldhäckslers 2 ausgeführt sind, zu führen und mittels einer Überladeeinrichtung in einen - nicht dargestellten - Ladebehälter abzuwerfen. Die Bearbeitungs- und Förderorgane des Feldhäckslers 2 umfassen unter anderem eine Einzugsvorrichtung 5, welches aus mehreren, in einem Einzugsgehäuse hintereinander angeordneten Walzenpaaren besteht. Das Vorsatzgerät 4 ist an der Einzugsvorrichtung 5 ankoppelbar. Weiterhin eine Häckseleinrichtung 6, die mittels einer rotierenden, mit Messern ausgestatteten Häckseltrommel das Erntegut in Zusammenwirkung mit einer Gegenschneide zerkleinert, eine der Häckseleinrichtung 6 in einem Förderschacht in Gutstromrichtung nachgelagerte Konditioniereinrichtung 7 sowie einen der Konditioniereinrichtung 7 im Förderschacht in Gutstromrichtung nachgelagerten Auswurfbeschleuniger 8, welcher das Erntegut 3 mittels rotierender Wurfpaddel für den sicheren Auswurf durch die Überladeeinrichtung beschleunigt. Das Vorsatzgerät 4, die Einzugsvorrichtung 5, die Häckseleinrichtung 6, die Konditioniereinrichtung 7 sowie der Auswurfbeschleuniger 8 werden nachfolgend als Arbeitsorgane bezeichnet. Im Heck des Feldhäckslers 2 ist ein Verbrennungsmotor 9 als Hauptantriebsaggregat angeordnet.

Als an die Einzugsvorrichtung ankoppelbare Vorsatzgerät 4 kommen unterschiedliche Typen zum Einsatz, die in Abhängigkeit von der Erntegutart ausgewählt werden. Beispielsweise wird zur Aufnahme von Schwaden eine so genannte Pick-up am Feldhäcksler 2 verwendet. Für das Ernten von Ganzpflanzen kommt hingegen ein Scheibenmähwerk zum Einsatz. Beim Ernten von Mais wird ein reihenunabhängig arbeitendes Maisgebiss oder ein reihenabhängig arbeitender Maispflücker an die Einzugsvorrichtung des Feldhäckslers 2 angekoppelt.

Die vorgenannten, nicht abschließend aufgezählten Vorsatzgeräte, unterscheiden sich hinsichtlich ihres Antriebes durch unterschiedliche Betriebsspezifikationen. So bedürfen das Maisgebiss oder die Pick-up einer variablen Antriebsdrehzahl, während das Scheibenmähwerk mit einer konstanten Antriebsdrehzahl arbeitet. Des Weiteren ist die Leistungsaufnahme des Scheibenmähwerkes höher als die der Pick-up oder des Maisgebisses.

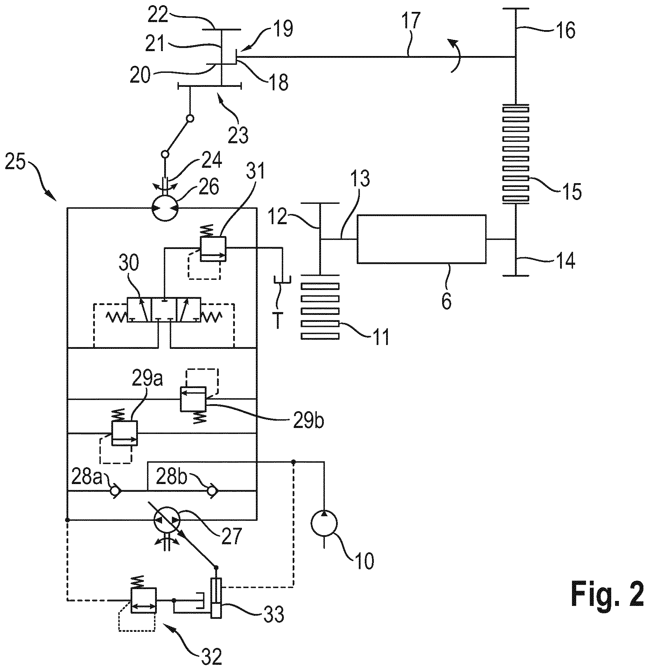

In Fig. 2 ist schematisch ein Antriebsstrang des Feldhäckslers 2 dargestellt. Der Feldhäcksler 2 weist eine von dem Verbrennungsmotor 9 angetriebene Speisepumpe 10 auf. Ferner ist in Fig. 2 ein erster Riementrieb 11 angedeutet, der unter anderem dem Antrieb der Häckseleinrichtung 6 dient. Der erste Riementrieb 11 verbindet ein trieblich mit dem Verbrennungsmotor verbundenes Verteilergetriebe mit einer Antriebsriemenscheibe 12 auf einer Antriebswelle 13 der Häckseleinrichtung 6. Auf der Antriebswelle 13 ist eine Abtriebsriemenscheibe 14 angeordnet, die Teil eines zweiten Riementriebes 15 ist. Der zweite Riementrieb 15 verbindet mittels eines Antriebsriemens die Abtriebsriemenscheibe 14 der Häckseleinrichtung 6 trieblich mit einer Antriebsriemenscheibe 16. Die Antriebsriemenscheibe 16 ist durch eine Abtriebswelle 17 und ein endseitig an auf dieser angeordnetes Zahnrad 18, das ein Zahnrad 20 eines Zahnradgetriebes 19 kämmt, mit diesem verbunden. Das Zahnradgetriebe 19 umfasst eine Welle 21 auf der das Zahnrad 20 sowie ein Abtriebselement 22, mit welchem das jeweilige Vorsatzgerät 4 koppelbar ist, angeordnet sind.

An der Welle 21 des Zahnradgetriebes 19 ist eine weitere Stirnradstufe 23 angeordnet, welche die Welle 21 mit einer Antriebswelle 24 eines Hydraulikmotors 26 eines hydrostatischen Antriebs 25 trieblich verbindet, die Bestandteile eines ersten Hydraulikkreislaufes 34a sind. Der hydrostatische Antrieb 25 umfasst weiterhin eine Hydraulikpumpe 27, die den Hydraulikmotor 26 antreibt. Der hydrostatische Antrieb 25 wird von der Hydraulikpumpe 10 gespeist. Zwei Rückschlagventile 28a, 28b öffnen beziehungsweise sperren den Zufluss von Hydrauliköl durch die Speisepumpe10, um Leckagen des hydrostatischen Antriebes 25 auszugleichen. Des Weiteren umfasst der hydrostatische Antrieb 25 zwei Druckbegrenzungsventile 29a, 29b, welche entsprechend der Förderrichtung der Hydraulikpumpe 27 bei einer Überschreitung eines festlegbaren hydraulischen Drucks ansprechen. Ein Wegeventil 30 verbindet den ersten Hydraulikkreislauf 34a des hydrostatischen Antriebs 25 durch ein weiteres Druckbegrenzungsventil 31 mit einem Tank T.

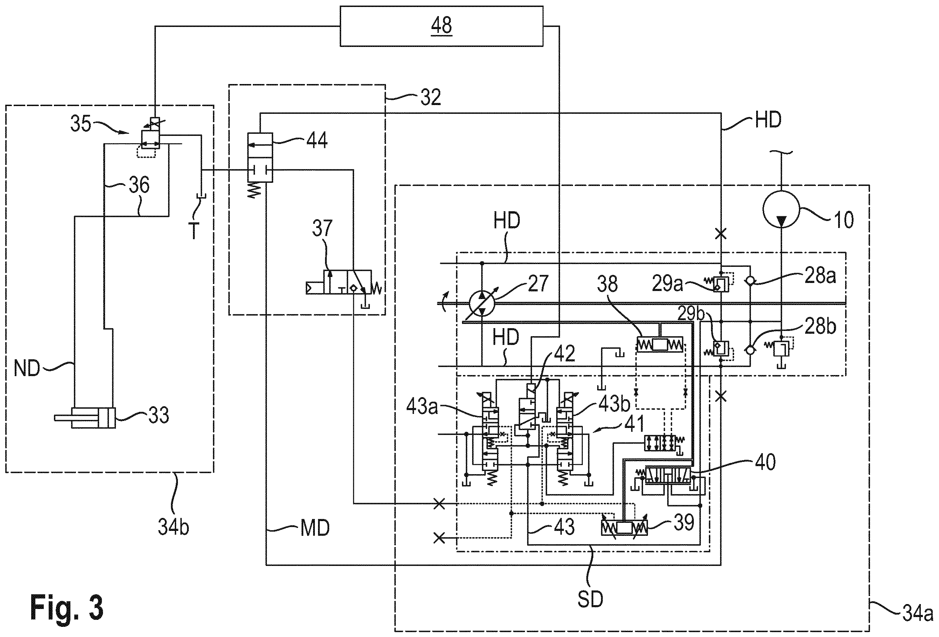

Der in Fig. 2 schematisch dargestellte Antriebsstrang ermöglicht eine Addition der Antriebsleistung des hydrostatischen Antriebssystems 25 und der mechanischen Leistung des als zweiter Riementrieb 15 ausgeführten mechanischen Antriebs. Um zu vermeiden, dass der mechanische Antrieb 15 dabei den hydrostatischen Antrieb 25 antreibt, wodurch Blindleistung im Antriebsstrang generiert würde, ist eine Druckregeleinrichtung 32 vorgesehen, die den hydrostatischen Antrieb 25 auf einen fest eingestellten Druck regelt. Diese Druckregeleinrichtung 32 ist in Fig. 3 im Detail dargestellt. Die Druckregeleinrichtung 32 ist mit einem zweiten Hydraulikkreislauf 34b gekoppelt, der einen doppelt wirkenden Hydraulikzylinder 33, der Teil eines Spannsystems ist, umfasst, welches den zweiten Riementrieb 15 schaltet beziehungsweise die Riemenspannung aufrecht erhält. Der Hydraulikzylinder 33 des Spannsystems dient einerseits zur Aufrechterhaltung der Riemenspannung des zweiten Riementriebes 15 und zudem als Kupplung, mit der der zweite Riementrieb 15 zu- und abschaltbar ist.

Zur Abdeckung des Drehzahl- und Antriebsleistungsspektrums von unterschiedlichen Vorsatzgerätetypen ist vorgesehen, dass in Abhängigkeit vom Typ des Vorsatzgerätes eine Zuschaltung des mechanischen Antriebs erfolgt. Hierzu wird bei einem Anschluss eines Vorsatzgerätes 4 an die Erntemaschine 1, im Ausführungsbeispiel an den Feldhäcksler 2, der Typ des Vorsatzgerätes 4 von einer Steuerungseinrichtung automatisch erkannt. Alternativ kann vorgesehen sein, dass der jeweilige Vorsatzgerätetyp mittels einer Eingabeeinrichtung durch eine entsprechende Eingabe eines Vorsatzgerätetyps oder durch eine Auswahl unter verschiedenen Vorsatzgeräten durch einer Bedienperson der Steuerungseinrichtung bekannt gemacht wird.

Eine Detektion eines Maisgebisses oder einer Pick-up als angeschlossenem Vorsatzgerät 4 führt nicht zu einer Aktivierung der Druckregeleinrichtung 32, da die von dem hydrostatischen Antrieb 25 bereitgestellte Leistung ausreicht um diese Vorsatzgerätetypen anzutreiben. Bei einer Detektion eines Scheibenmähwerkes als angeschlossenem Vorsatzgerät 4 wird die Druckregeleinrichtung 32 aktiviert. Die Detektion und daraufhin die Aktivierung der Druckregeleinrichtung 32 kann auch in diesem Fall automatisch erfolgen. Ebenfalls denkbar ist die manuelle Aktivierung der Druckregeleinrichtung 32 durch die Bedienperson mittels einer entsprechenden Eingabe in die Steuereinrichtung 48.

Die Darstellung in Fig. 3 zeigt eine schematische Ansicht des ersten und des zweiten Hydraulikkreislaufes 34a, 34b und der diese miteinander regelungstechnisch koppelnden Druckregeleinrichtung 32.

Die Druckregeleinrichtung 32 umfasst ein 3/2-Wege-Sitzventils 37 sowie ein Regelventil 44. Das Fördervolumen der Hydraulikpumpe 27 ist durch die Verstellung ihres Schwenkwinkels veränderbar, bis hin zu einer Förderrichtungsumkehr. Hierzu weist die Hydraulikpumpe 27 einen Steuerkolben 38 auf, der mit einer Stellkammer 39 hydraulisch verbunden ist. Die Stellkammer 39 regelt in Abhängigkeit von einem Steuerdruck SD die Auslenkung des Steuerkolbens 38, das heißt die Einstellung des Schwenkwinkels der Hydraulikpumpe 27. Der Steuerdruck SD wird von einer Druckunterstützung 40 verstärkt.

Die Stellkammer 39 wird von einer Ventilanordnung 41 angesteuert. Die Ventilanordnung 41 umfasst ein Freigabeventil 42, das von einer Steuerleitung 43 mit einem Speisedruck SD beaufschlagt ist. In einer ersten Schaltstellung des Freigabeventils 42 wird das Hydrauliköl zu einem Tank T abgeführt. In einer zweiten Schaltstellung des Freigabeventils 42 fließt das Hydrauliköl in Richtung zweier elektrisch schaltbarer Ventile 43a, 43b, welche die Stellkammer 39 in Abhängigkeit von dem einzustellenden Schwenkwinkel der Hydraulikpumpe 27 beaufschlagen.

Ein federbelastetes Regelventil 44 wird an seiner einen Messstelle mit einem Hochdruck HD des Hochdruckhydraulikkreislaufes und an seiner weiteren Messstelle mit einem Niederdruck ND beaufschlagt. Die Federbelastung des Regelventils 44 ist einstellbar.

Der Hydraulikkreislauf 34b umfasst neben dem doppelt wirkenden Hydraulikzylinder 33, Druckleitungen 36 sowie ein elektrisch schaltbares Schaltventil 35. Der kolbenstangenseitige Druckraum des Hydraulikzylinders 33 ist permanent mit dem Niederdruck ND beaufschlagt. Der kolbenseitige Druckraum des Hydraulikzylinders 33 ist variabel mit einem Hydraulikdruck beaufschlagbar. Durch das Schalten des Schaltventils 35 wird der kolbenseitige Druckraum des Hydraulikzylinders 33 ebenfalls mit Niederdruck ND beaufschlagt,. Das Beaufschlagen des kolbenseitigen Druckraumes des Hydraulikzylinders 33 mit dem Niederdruck ND führt zum Auskuppeln des zweiten Riementriebes 15.

Mit dem Schalten des Schaltventils 35 des Hydraulikkreislaufes 34b, welches von der Steuerungseinrichtung 48 angesteuert wird, geht eine hydraulische Ansteuerung eines 3/2-Wege-Sitzventils 37 einher. Bei einer kolbenseitigen Beaufschlagung des Hydraulikzylinders 33 wird die externe Steuerölversorgung des 3/2-Wege-Sitzventils 37 ebenfalls mit Druck beaufschlagt, so dass dieses geschaltet wird. Die Ansteuerung des Schaltventils 35 erfolgt in Abhängigkeit von dem zu anzutreibenden Vorsatzgerätes 4.

Mit dem Schalten des 3/2-Wege-Sitzventils 37 steht an einem Anschluss des Regelventils 44 der Steuerdruck SD an. Überschreitet die Druckdifferenz zwischen dem Hochdruck HD und dem Niederdruck ND einen einstellbaren Wert, der durch die Federkraft vorgebbar ist, schaltet das Regelventil 44. Das Schalten führt dazu, dass ein Teil des Hydraulikölstroms mit dem Niederdruck ND über eine Messstelle Z hinter dem Freigabeventil 42 in Richtung des Tanks T entlastet wird. Dieser Hydraulikölstrom steht der Stellkammer 39 nicht zur Verfügung, so dass der Steuerkolben 38 in der Weise angesteuert wird, dass der Schwenkwinkel der Hydraulikpumpe 27 derart verändert wird, dass das Fördervolumen abnimmt. Dadurch verändert sich die Druckdifferenz am Regelventil 44, welches daraufhin erneut schaltet, so dass das 3/2-Wege-Sitzventil 37 sperrt. Als Reaktion auf das Unterbrechen des Flusses des Hydrauliköls durch das 3/2-Wege-Sitzventils 37, wird die Stellkammer 39 durch den Steuerdruck SD derart angesteuert, das der Schwenkwinkel der Hydraulikpumpe 27 in der Weise geändert wird, dass das Fördervolumen wieder ansteigt. Das erneute Ansteigen des Fördervolumens führt bei dem Überschreiten der Druckdifferenz zum erneuten Schalten des Regelventils 44.

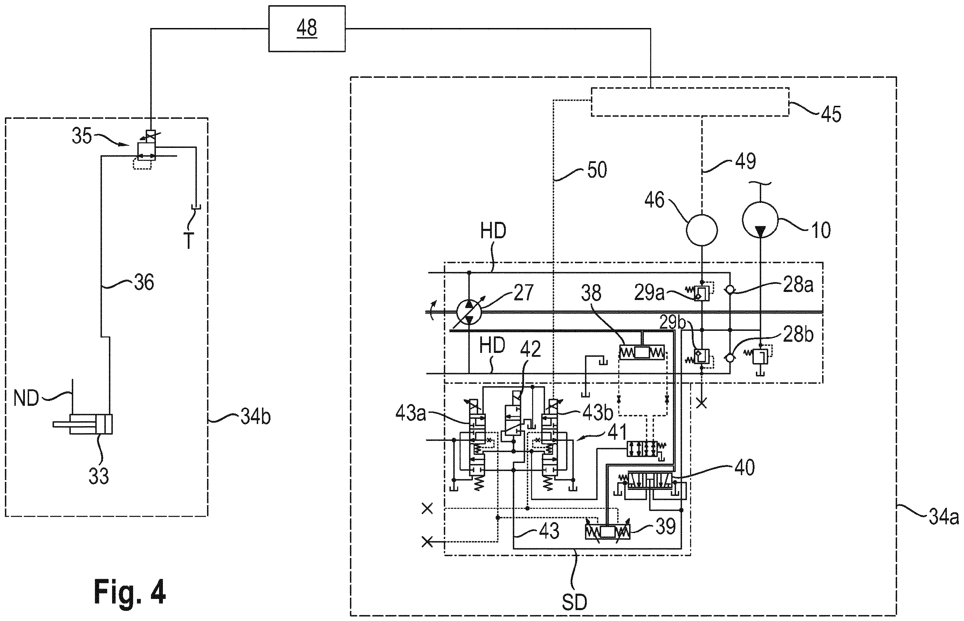

Fig. 4 zeigt eine alternative Ausführungsform des ersten Hydraulikkreislaufes 34a und des zweiten Hydraulikkreislaufes 34b gemäß Fig. 3. Im Zusammenhang mit Fig. 4 wird nur auf die Änderungen gegenüber der Fig. 3 eingegangen. Bei dieser Ausführungsform handelt es sich um eine Vereinfachung des Aufbaus der beiden Hydraulikkreisläufe 34a, 34b, welche dadurch erreicht wird, dass auf eine aus 3/2-Wege-Sitzventil und Regelventil 44 bestehende Druckregeleinrichtung 32 verzichtet wird. Die hydraulische Druckregeleinrichtung 32 wird durch eine elektronische Druckregelung ersetzt. Hierzu überwacht ein Drucksensor 46 den von der Hydraulikpumpe 27 bereitgestellten Hochdruck HD. Ein den Ist-Druck repräsentierendes Signal wird durch eine Signalleitung 49 an eine elektronische Regeleinrichtung 45 gesandt. Die elektronische Regeleinrichtung 45 führt einen Soll-Ist-Wert-Vergleich durch. Bei einer Abweichung von einem beispielsweise durch die Steuerungseinrichtung 48 vorgebbaren Soll-Druck wird durch eine Steuerleitung 50 das Freigabeventil 42 angesteuert, welches der Regelung des Schwenkwinkels der Hydraulikpumpe 27 dient. Bei dieser Alternative wird auf den absoluten Druck im ersten Hydraulikkreislauf 34a geregelt. Die Steuerungseinrichtung 48 verbindet den ersten Hydraulikkreis 34a und den zweiten Hydraulikreis 34b steuerungstechnisch miteinander.

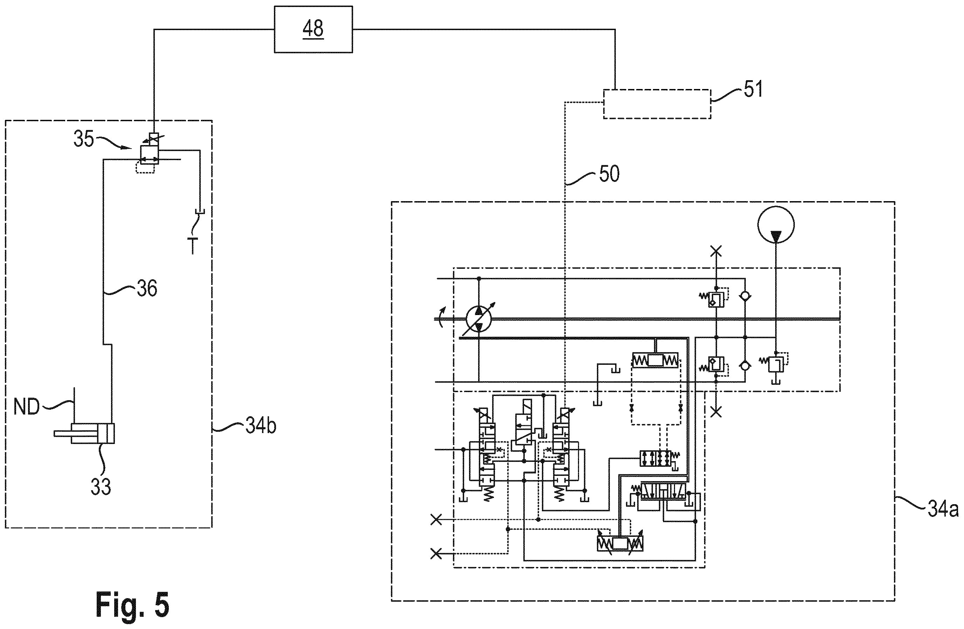

Die Darstellung in Fig. 5 zeigt ein weiteres Ausführungsbeispiel des ersten Hydraulickreislaufes 34a und des zweiten Hydraulikkreislaufes 34b gemäß Fig. 3. Gemäß dieser Ausführungsform ist eine einfache Steuerung anstelle einer Regelung zur Vorgabe des Hochdrucks HD im ersten Hydraulikkreislaufes 34 vorgesehen. Die Steuerung wird durch eine Vorgabe eines Steuerstromes zur Ansteuerung des elektrisch schaltbaren Ventils 43b realisiert. Auch bei diesem Ausführungsbeispiel wird, wie auch gemäß der Ausführungsform nach Fig. 4, auf die Druckregeleinrichtung 32 gemäß Fig. 3 verzichtet.

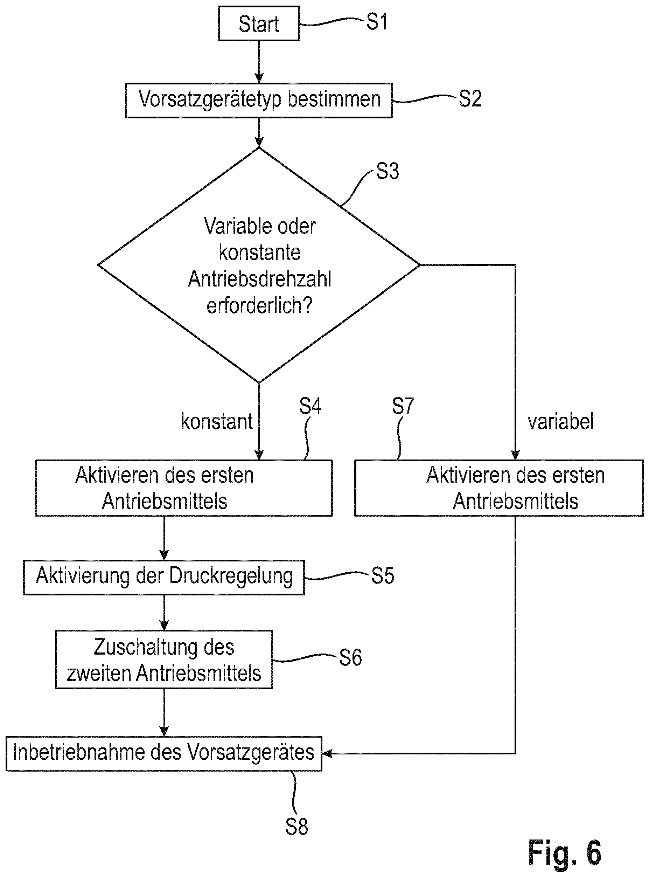

In Fig. 6 ist ein Flussdiagramm zur Veranschaulichung des der Inbetriebnahme eines an die Erntemaschine anschließbaren Vorsatzgerätes 4 dargestellt.

In einem ersten Schritt S1 kann das Anbringen eines Vorsatzgerätes 4 an die Einzugsvorrichtung 5 des Feldhäckslers 2 den Prozess des Erkennens des Vorsatzgerätes 4 initiieren. In einem Schritt S2 wird der Typ des Vorsatzgerätes 4 bestimmt. Dies kann beispielsweise durch einen Datenaustausch zwischen der Steuerungseinrichtung 48 des Feldhäckslers 2 und dem Vorsatzgerät 4 erfolgen oder durch eine manuelle Eingabe einer Bedienperson durch eine geeignete Eingabeeinrichtung der Steuerungseinrichtung 48. Anhand des in Schritt S2 bestimmten Typs des Vorsatzgerätes 4 wird im Schritt S3 bestimmt, ob das an die Einzugsvorrichtung 5 angebrachte Vorsatzgerät 4 mit einer variablen Antriebsdrehzahl oder einer konstanten Antriebsdrehzahl und insbesondere mit einer erhöhten Leistungsaufnahme betrieben werden muss.

Wird im Schritt S3 ein Vorsatzgeräte 4 bestimmt, welches mit konstanter Drehzahl und einer höheren Leistungsaufnahme angetrieben werden muss, als der, welche der die variable Drehzahlregelung ermöglichende hydrostatische Antrieb 25 bereitstellen kann, so wird in einem Schritt S4 zunächst der hydrostatische Antrieb 25 aktiviert und auf die erforderliche Antriebsdrehzahl gebracht. In einem darauffolgenden Schritt S5 wird die Druckregelung aktiviert, um die Antriebsdrehzahl des hydrostatischen Antriebes 25 konstant zu halten. Liegt eine konstante Antriebsdrehzahl vor, erfolgt in einem Schritt S6 die Zuschaltung des als Riementrieb 15 ausgeführten zweiten Antriebsmittels. Hierdurch wird mittels der Leistungsaddition die erforderliche Leistung zum Betreiben des Vorsatzgerätes bereitgestellt. In Schritt S8 erfolgt die Aufnahme des Erntebetriebes.

Wird im Schritt S3 ein Vorsatzgeräte 4 bestimmt, welches mit einer variablen Drehzahl angetrieben werden kann, so wird im Schritt S7 der hydrostatische Antrieb 25 aktiviert und für das Betreiben des Vorsatzgerätes 4auf die erforderliche Antriebsdrehzahl gebracht. Im Schritt S8 erfolgt die Aufnahme des Erntebetriebes.

**Bezugszeichenliste**

| | | | |
|---|---|---|---|
| **1** | Erntemaschine | **29a** | Druckbegrenzungsventil |
| **2** | Feldhäcksler | **29b** | Druckbegrenzungsventil |
| **3** | Erntegut | **30** | Wegeventil |
| **4** | Vorsatzgerät | **31** | Druckbegrenzungsventil |
| **5** | Einzugsvorrichtung | **32** | Druckregeleinrichtung |
| **6** | Häckseleinrichtung | **33** | Hydraulikzylinder |
| **7** | Konditioniereinrichtung | **34a** | Erster Hydraulikkreislauf |
| **8** | Auswurfbeschleuniger | **34b** | Zweiter Hydraulikreislauf |
| **9** | Verbrennungsmotor | **35** | Schaltventil |
| **10** | Speisepumpe | **36** | Druckleitung |
| **11** | Erster Riementrieb | **37** | 3/2-Wege-Sitzventil |
| **12** | Antriebsriemenscheibe | **38** | Steuerkolben |
| **13** | Antriebswelle | **39** | Stellkammer |
| **14** | Abtriebsriemenscheibe | **40** | Druckunterstützung |
| **15** | Zweiter Riementrieb | **41** | Ventilanordnung |
| **16** | Antriebsriemenscheibe | **42** | Freigabeventil |
| **17** | Abtriebswelle | **43a** | Ventil |
| **18** | Zahnrad | **43b** | Ventil |
| **19** | Zahnradgetriebe | **44** | Regelventil |
| **20** | Zahnrad | **45** | Regeleinrichtung |
| **21** | Welle | **47** | Drucksensor |
| **22** | Abtriebselement | **48** | Steuerungseinrichtung |
| **23** | Stirnradstufe | **49** | Signalleitung |
| **24** | Antriebswelle | **50** | Steuerleitung |
| **25** | Hydrostatischer Antrieb | | |
| **26** | Hydraulikmotor | **T** | Tank |
| **27** | Hydraulikpumpe | **HD** | Hochdruck |
| **28a** | Rückschlagventil | **ND** | Niederdruck |
| **28b** | Rückschlagventil | **SD** | Steuerdruck |

## Patentansprüche

1. Selbstfahrende Erntemaschine (1, 2),
- mit einem als Verbrennungsmotor (9) ausgeführten Hauptantrieb, der durch mindestens einen Antriebsstrang (11) trieblich mit einem oder mehreren Arbeitsorganen der Erntemaschine (1, 2) verbunden ist, welche eine Einzugsvorrichtung (5) sowie ein Vorsatzgerät (4) zur Aufnahme von Erntegut umfassen,
- mit einer Steuerungseinrichtung (48), die zur Steuerung und/oder Regelung von Betriebsprozessen eingerichtet ist, und
- mit einem ersten, mit einer Antriebswelle (21) verbundenen Antriebsmittel (25) zum drehzahlvariablen Antreiben des an der Einzugsvorrichtung (5) anbringbaren Vorsatzgerätes (4),
wobei ein zweites, mit der Antriebswelle (21) verbindbares Antriebsmittel (15) zum Antreiben des Vorsatzgerätes (4) mit konstanter Drehzahl zuschaltbar ist, wobei das erste Antriebsmittel (25) als hydrostatischer Antrieb und das zweite Antriebsmittel (15) als mechanischer Antrieb ausgeführt ist, wobei die Steuerungseinrichtung (48) dazu eingerichtet ist, in Abhängigkeit vom Typ des an die Einzugseinrichtung (5) angebrachten Vorsatzgerätes (4) das erste Antriebsmittel (25) und das zweite Antriebsmittel (15) anzusteuern,
**dadurch gekennzeichnet, dass**
eine Summation der Antriebsleistungen der ersten Antriebsmittel und der zweiten Antriebsmittel durch Zuschaltung des mechanischen Antriebs (15) in Abhängigkeit vom Typ des Vorsatzgerätes (4) erfolgt, und dass die Zuschaltung des mechanischen Antriebs (15) zur Abdeckung des Drehzahl- und Antriebsleistungsspektrums der unterschiedlichen Vorsatzgerätetypen vorgesehen ist.

2. Selbstfahrende Erntemaschine (1, 2) nach Anspruch 1, **dadurch gekennzeichnet, dass** eine Druckregeleinrichtung (32) vorgesehen ist, die den hydrostatischen Antrieb (25) auf einen fest eingestellten Druck regelt, um zu vermeiden, dass der mechanische Antrieb (15) dabei den hydrostatischen Antrieb (25) antreibt, wodurch Blindleistung im Antriebsstrang generiert wird.

3. Selbstfahrende Erntemaschine (1, 2) nach einem der vorherigen Ansprüche, **dadurch gekennzeichnet, dass** die Steuerungseinrichtung (48) dazu eingerichtet ist, den Typ des angeschlossenen Vorsatzgerätes (4) automatisch zu erkennen.

4. Selbstfahrende Erntemaschine (1, 2) nach einem der vorherigen Ansprüche, **dadurch gekennzeichnet, dass** das zweite Antriebsmittel als Riementrieb (15) ausgeführt ist, dessen Riemen durch eine Spannsystem (33) kuppelbar ist.

5. Selbstfahrende Erntemaschine (1, 2) nach einem der vorherigen Ansprüche, **dadurch gekennzeichnet, dass** die Steuervorrichtung (48) dazu eingerichtet ist, eine Arbeitsdrehzahl des hydrostatischen Antriebes (25) zu überwachen und mit Erreichen eines Schwellwertes für die Arbeitsdrehzahl in Abhängigkeit vom Typ des Vorsatzgerätes (4) das zweite Antriebsmittel (15) zuzuschalten.

6. Selbstfahrende Erntemaschine (1, 2) nach einem der vorherigen Ansprüche, **dadurch gekennzeichnet, dass** die Steuerungseinrichtung (48) dazu eingerichtet ist, einen doppelt wirkenden Hydraulikzylinder (33) des Spannsystem des Riementriebes (15) anzusteuern, um den Riementrieb zu kuppeln.

7. Selbstfahrende Erntemaschine nach einem der vorherigen Ansprüche, **dadurch gekennzeichnet, dass** die Steuerungseinrichtung (48) dazu eingerichtet ist, den hydrostatischen Antrieb (25) auf den vorgebbaren, konstanten Druck einzustellen.

8. Selbstfahrende Erntemaschine (1, 2) nach Anspruch 7, **dadurch gekennzeichnet, dass** ein erster, das erste Antriebsmittel (25) umfassender Hydraulikkreislauf (34a) und ein zweiter, das zweite Antriebsmittel (15) umfassender Hydraulikkreislauf (34b) durch die Druckregeleinrichtung (32) regelungstechnisch miteinander gekoppelt sind.

9. Selbstfahrende Erntemaschine (1, 2) nach Anspruch 8, **dadurch gekennzeichnet, dass** die Druckregeleinrichtung (32) ein erstes Ventil (37), welches der Druckregelung des hydrostatischen Antriebes dient, und ein zweites Ventil (44) umfasst, welches auf eine feste Druckdifferenz auf der Hochdruckseite des hydrostatischen Antriebes (25) regelt.

10. Selbstfahrende Erntemaschine (1, 2) nach einem der Ansprüche 1 bis 7, **dadurch gekennzeichnet, dass** der zweite Hydraulikkreislauf (34b) ein Schaltventil (35) umfasst, dass von der Steuerungseinrichtung (48) in Abhängigkeit von der Vorsatzgeräteerkennung schaltbar ist.

11. Selbstfahrende Erntemaschine (1, 2) nach einem der Ansprüche 1 bis 7, **dadurch gekennzeichnet, dass** zur Druckregelung des ersten Hydraulikkreislaufes (34a) ein Drucksensor (46) vorgesehen ist, der den Hydraulikdruck im ersten Hydraulikkreislauf (34a) detektiert, und einen den Druck repräsentierendes Signal an eine elektronische Regeleinrichtung (45) sendet, die ein Freigabeventil (42) zur Regelung einer den Hochdruck im ersten Hydraulikkreislauf (34a) bereitstellenden Hydraulikpumpe (27) ansteuert.

12. Selbstfahrende Erntemaschine (1, 2) nach einem der Ansprüche 1 bis 7, **dadurch gekennzeichnet, dass** zur Druckregelung des ersten Hydraulikkreislaufes (34a) eine Steuereinheit ein elektrisch betätigbares Freigabeventil (42) zur Regelung einer den Hochdruck im ersten Hydraulikkreislauf (34a) bereitstellenden Hydraulikpumpe (27) mit einem vorgebaren Strom ansteuert.

## Claims

1. A self-propelled harvesting machine (1, 2),
- having a main drive which is configured as a combustion engine (9), which is operatively connected by means of at least one power train (11) to one or more working implements of the harvesting machine (1, 2) which comprise an intake means (5) as well as a front attachment (4) for picking up crop,
- having a control device (48) which is configured for controlling and/or regulating operational processes, and
- having a first drive means (25) linked to a drive shaft (21) for driving the front attachment (4), which can be attached to the intake means (5), at a variable speed,
wherein a second drive means (15), which can be linked to the drive shaft (21) in order to drive the front attachment (4) at a constant speed, is capable of being connected, wherein the first drive means (25) is configured as a hydrostatic drive and the second drive means (15) is configured as a mechanical drive, wherein the control device (48) is configured in a manner such as to control the first drive means (25) and the second drive means (15) as a function of the type of the front attachment (4) attached to the intake device (5),
**characterized in that**
an addition of the driving power of the first drive means and of the second drive means is carried out by connecting the mechanical drive (15) in dependence upon the type of front attachment (4), and **in that** connection of the mechanical drive (15) is arranged to cover the speed and driving power spectrum of the various types of front attachments.

2. The self-propelled harvesting machine (1, 2) according to claim 1, **characterized in that** a pressure regulation device (32) is provided which regulates the hydrostatic drive (25) to a fixed set pressure in order thereby to prevent the mechanical drive (15) from driving the hydrostatic drive (25), whereupon reactive power would be generated in the drive train.

3. The self-propelled harvesting machine (1, 2) according to one of the preceding claims, **characterized in that** the control device (48) is configured to detect the type of the attached front attachment (4) automatically.

4. The self-propelled harvesting machine (1, 2) according to one of the preceding claims, **characterized in that** the second drive means is configured as a belt drive (15), wherein its belts can be coupled by means of a tensioning system (33).

5. The self-propelled harvesting machine (1, 2) according to one of the preceding claims, **characterized in that** the control device (48) is configured in a manner such as to monitor a working speed of the hydrostatic drive (25) and, upon reaching a threshold value for the working speed, to connect the second drive means (15) as a function of the type of front attachment (4).

6. The self-propelled harvesting machine (1, 2) according to one of the preceding claims, **characterized in that** the control device (48) is configured in a manner such as to control a double acting hydraulic cylinder (33) of the tensioning system of the belt drive (15) in order to couple the belt drive.

7. The self-propelled harvesting machine (1, 2) according to one of the preceding claims, **characterized in that** the control device (48) is configured in a manner such as to set the hydrostatic drive (25) to a constant pressure which can be pre-set.

8. The self-propelled harvesting machine (1, 2) according to claim 7, **characterized in that** a first hydraulic circuit (34a) comprising the first drive means (25) and a second hydraulic circuit (34b) comprising the second drive means (15) are coupled together by means of the pressure regulation device (32) in a manner that uses control technology.

9. The self-propelled harvesting machine (1, 2) according to claim 8, **characterized in that** the pressure regulation device (32) comprises a first valve (37) which acts to regulate the pressure of the hydrostatic drive, and a second valve (44) which sets a fixed pressure difference on the high pressure side of the hydrostatic drive (25).

10. The self-propelled harvesting machine (1, 2) according to one of claims 1 to 7, **characterized in that** the second hydraulic circuit (34b) comprises an on-off valve (35) which can be switched by the control device (48) as a function of the identification of the front attachment.

11. The self-propelled harvesting machine (1, 2) according to one of claims 1 to 7, **characterized in that** in order to regulate the pressure of the first hydraulic circuit (34a), a pressure sensor (46) is provided which detects the hydraulic pressure in the first hydraulic circuit (34a) and sends a signal representing the pressure to an electronic control device (45) which controls a release valve (42) in order to regulate a hydraulic pump (27) which provides the high pressure in the first hydraulic circuit (34a).

12. The self-propelled harvesting machine (1, 2) according to one of claims 1 to 7, **characterized in that** in order to regulate the pressure of the first hydraulic circuit (34a), a control unit controls an electrically actuatable release valve (42) in order to regulate a hydraulic pump (27) which provides the high pressure in the first hydraulic circuit (34a) with a flow that can be pre-set.

## Revendications

1. Machine de récolte automotrice (1, 2)
- comprenant un moyen d'entraînement principal qui est conformé en moteur à combustion interne (9) et qui est relié de manière motrice par l'intermédiaire d'au moins une chaîne de transmission (11) à un ou plusieurs organes de travail de la machine de récolte (1, 2), lesquels englobent un dispositif d'amenée (5) ainsi qu'un outil frontal (4) pour ramasser du produit de récolte,
- comprenant un équipement de commande (48) qui est agencé pour commander et/ou réguler des processus de fonctionnement, et
- comprenant un premier moyen d'entraînement (25) relié à l'arbre d'entraînement (21) pour l'entraînement à vitesse de rotation variable de l'outil frontal (4) à monter sur le dispositif d'amenée (5),
un second moyen d'entraînement (15) à relier à l'arbre d'entraînement (21) pouvant être activé pour entraîner l'outil frontal (4) à une vitesse de rotation constante, le premier moyen d'entraînement (25) étant conformé en entraînement hydrostatique et le second moyen d'entraînement (15) étant conformé en entraînement mécanique, l'équipement de commande (48) étant agencé pour commander le premier moyen d'entraînement (25) et le second moyen d'entraînement (15) en fonction du type de l'outil frontal (4) monté sur l'équipement d'amenée (5),
**caractérisée en ce que**
une addition des puissances d'entraînement des premiers moyens d'entraînement et des seconds moyens d'entraînement s'effectue par activation de l'entraînement mécanique (15) en fonction du type de l'outil frontal (4), et **en ce que** l'activation de l'entraînement mécanique (15) est prévue pour couvrir le spectre de vitesses de rotation et de puissances d'entraînement des divers types d'outil frontal.

2. Machine de récolte automotrice (1, 2) selon la revendication 1, **caractérisée par** un équipement de régulation de pression (32) qui régule l'entraînement hydrostatique (25) sur une pression fixe pour éviter que l'entraînement mécanique (15) n'entraîne l'entraînement hydrostatique (25), ce qui a pour effet de générer une puissance réactive dans la chaîne de transmission.

3. Machine de récolte automotrice (1, 2) selon une des revendications précédentes, **caractérisée en ce que** l'équipement de commande (48) est agencé pour reconnaître automatiquement le type de l'outil frontal (4) raccordé.

4. Machine de récolte automotrice (1, 2) selon une des revendications précédentes, **caractérisée en ce que** le second moyen d'entraînement est conformé en entraînement à courroie (15) dont la courroie est couplable par l'intermédiaire d'un système de tension (33).

5. Machine de récolte automotrice (1, 2) selon une des revendications précédentes, **caractérisée en ce que** le dispositif de commande (48) est agencé pour surveiller une vitesse de rotation de travail de l'entraînement hydrostatique (25) et, à l'atteinte d'une valeur seuil pour la vitesse de rotation de travail en fonction du type de l'outil frontal (4), pour activer le second moyen d'entraînement (15).

6. Machine de récolte automotrice (1, 2) selon une des revendications précédentes, **caractérisée en ce que** l'équipement de commande (48) est agencé pour commander un vérin hydraulique à double effet (33) du système de tension de l'entraînement à courroie (15) pour coupler l'entraînement à courroie.

7. Machine de récolte automotrice selon une des revendications précédentes, **caractérisée en ce que** l'équipement de commande (48) est agencé pour régler l'entraînement hydrostatique (25) à la pression constante prescriptible.

8. Machine de récolte automotrice (1, 2) selon la revendication 7, **caractérisée en ce qu'**un premier circuit hydraulique (34a) incluant le premier moyen d'entraînement (25) et un second circuit hydraulique (34b) incluant le second moyen d'entraînement (15) sont couplés entre eux en termes de régulation par l'intermédiaire de l'équipement de régulation de pression (32).

9. Machine de récolte automotrice (1, 2) selon la revendication 8, **caractérisée en ce que** l'équipement de régulation de pression (32) inclut une première valve (37), qui sert à la régulation de pression de l'entraînement hydrostatique, et une seconde valve (44), qui régule à une différence de pression fixe sur le côté haute pression de l'entraînement hydrostatique (25) .

10. Machine de récolte automotrice (1, 2) selon une des revendications 1 à 7, **caractérisée en ce que** le second circuit hydraulique (34b) inclut une valve de commande (35) qui est commandable par l'équipement de commande (48) en fonction de la reconnaissance d'outil frontal.

11. Machine de récolte automotrice (1, 2) selon une des revendications 1 à 7, **caractérisée en ce que**, pour la régulation de pression du premier circuit hydraulique (34a), il est prévu un capteur de pression (46), qui détecte la pression hydraulique dans le premier circuit hydraulique (34a) et envoie un signal représentant la pression à un équipement de régulation électronique (45), lequel commande une valve de libération (42) pour réguler une pompe hydraulique (27) fournissant la haute pression dans le premier circuit hydraulique (34a).

12. Machine de récolte automotrice (1, 2) selon une des revendications 1 à 7, **caractérisée en ce que**, pour la régulation de pression du premier circuit hydraulique (34a), une unité de commande commande avec un courant prescriptible une valve de libération à actionnement électrique (42) pour réguler une pompe hydraulique (27) fournissant la haute pression dans le premier circuit hydraulique (34a).
